# EUROPEAN PATENT SPECIFICATION

(11) **EP 3 926 221 B1**
(45) Date of publication and mention of the grant of the patent: **11.10.2023**
(21) Application number: 20305660.1
(22) Date of filing: 16.06.2020
(51) Int. Cl.: F16L 3/13, F16L 3/223, F16L 3/237, H02G 3/32

(54) **CLIP**
KLEMME
PINCE

(43) Date of publication of application: 22.12.2021
(73) Proprietor: A. Raymond et Cie, 38000 Grenoble (FR)
(72) Inventor: SASEK, Vaclav, 46006 Liberec (CZ)
(74) Representative: Ipside

(56) References cited:
- EP-A1- 0 628 737
- EP-A1- 2 472 129
- DE-A1- 1 903 060
- US-A1- 2007 234 678

## Description

### Technical field of the invention

The present disclosure relates generally to a fixing apparatus, more particularly to a clip for holding a piece having an elongated form, such as, tubes, hoses, pipes with different diameters.

### Background

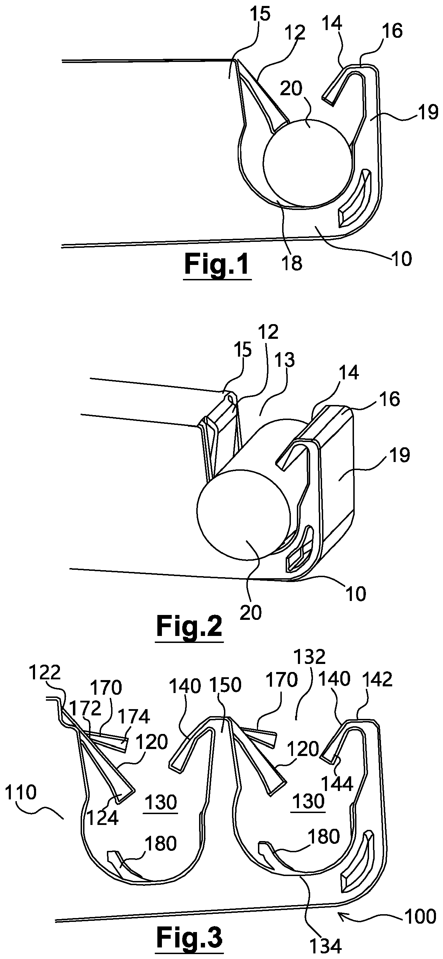

It is known that a clip can be used to fix tubes or the like on a structure. A clip is suitable to fix tubes of different diameters while keeping enough pull-out force which is necessary to prevent undesired disassembly of the clip-tube couple. Such a clip is illustrated on annexed figures 1 and 2.

Even though the illustrated clip with two detent arms can receive tubes of different diameters in its cavity, the retention performance of the clip is not satisfactory when a large-diameter tube is inserted thereinto. In fact, in this situation, only one detent arm rests on the tube, while the other detent arm is kept bent to a sidewall of the cavity by the large-diameter tube. With a reduced pull-out force, the tube can escape from the clip under undesired external force, such as vibration, oscillation of the structure to which the clip is attached. Further clips suitable to fix tubes of different diameters are known from US 2007/234678 A1.

Therefore, there is a need for a clip for bearing a tube-like piece having improved performance especially pieces of large-diameter.

### Summary of the invention

An object of the present disclosure is to provide a clip adapted to bear an elongated piece. The clip comprises:
- at least one clip unit having a recess, wherein the recess is defined by a bottom, two opposing sidewalls, and an opening opposing to said bottom;
- a first elastic detent arm and a second elastic detent arm having each an upper end and a lower end, wherein the detent arms is integrated respectively with an upper portion of the two sidewalls at the upper end, and the two detent arms project diagonally towards the bottom;
   the clip unit comprises a stop member having a superior end and an inferior end, the superior end being attached to the first detent arm on its superior surface, said inferior end protruding downwards towards the second arm.

The lower end of the first detent arm has a lower level than that of the second detent

In some embodiments, the inferior end has a level between that of the first detent arm and that of the second detent arm.

In some embodiments, the clip unit comprises a bottom leg at the bottom.

In some embodiments, the bottom leg is elastic and has a curving form toward the opening.

In some embodiments, the bottom leg at the bottom is integrated with the bottom and has a free end protrudes towards the first detent arm.

In some embodiments, the bottom leg is less wide than the bottom along the recess.

In some embodiments, the clip comprises a plurality of clip units disposed substantially in parallel.

In some embodiments, the stop member, the detent arms present edges parallel to each other.

In some embodiments, the inferior end of the stop member presents an edge parallel to the direction along the recess.

In some embodiments, the first detent arm and the stop member are of the same rigidity.

In some embodiments, the stop member can be of less length than the first detent arm.

In some embodiments, the superior end of the stop member is close to the upper end of the first detent arm, more particularly, the stop member is located in the middle of the first detent arm in the direction along the recess.

In some embodiments, the clip is formed by integral injection molding.

In some embodiments, the clip further comprises securing means for fastening the clip to a structure to be fastened.

Advantageously, the clip according to the present disclosure can hold firmly different tubes or the like with a wider range of diameters, against for example vibration or oscillation.

Further advantages will be apparent from the following description of the present disclosure.

### Brief description of the drawings

The invention may be better understood by referring to the following description and accompanying drawings that illustrate embodiments of the invention. Among the drawings:
Figure 1 illustrates a side view showing a clip according to the state of the art with pipes inserted;
Figure 2 is a perspective view showing a clip according to the state of the art with pipes inserted;
Figure 3 illustrates a side view showing a clip in accordance with certain aspects of the present disclosure;
Figure 4 is a perspective view showing a clip in accordance with certain aspects of the present disclosure;
Figure 5 illustrates a side view showing a clip with pipes inserted in accordance with certain aspects of the present disclosure;
Figure 6 is a perspective view showing a clip with pipes inserted in accordance with certain aspects of the present disclosure.

### Detailed description of embodiments

Embodiments of the present disclosure are described in detail with the technical matters, structural features, achieved objects, and effects with reference to the accompanying drawings. Specifically, the terminologies in the embodiments of the present disclosure are merely for describing the purpose of the certain embodiment, but not to limit the disclosure.

The expression of the singular number in the present disclosure includes the meaning of the plural number unless the meaning of the singular number is definitely different from that of the plural number in the context. In the following description, the term "include" or "have" may represent the existence of a feature, a number, a step, an operation, a component, a part or the combination thereof described in the present disclosure, and may not exclude the existence or addition of another feature, another number, another step, another operation, another component, another part or the combination thereof.

The terms "first" or "second" are used for the purpose of explanation about various components, and the components are not limited to the terms "first" and "second". The terms "first" and "second" are only used to distinguish one component from another component. For example, a first component may be named as a second component without deviating from the scope of the present disclosure.

Figure 1 illustrates a side view showing a known clip 10 with a small-diameter pipe 20 inserted. The clip 10 comprises a cavity 13, two lateral sidewalls 15, 19, a long detent arm 12 and a short detent arm 14. The pipe 20 can be held by the clip 10. When a small-diameter pipe 20 is held by the clip 10, the pipe is in fact kept under the long detent arm 12. When the pipe-clip assembly is put under vibration/oscillation or other undesired external forces that can disassemble the pipe 20 from the clip 10, the long detent arm may be deformed, but the short detent arm 14 in free state helps to catch the pipe and prevent it from escaping the clip. The pull-out force of the pipe can be considered as being enough to prevent unwanted separation of the pipe 20 and the clip 10.

Figure 2 is a perspective view showing a known clip according to the state of the art with a large-diameter pipe 20 inserted. As shown in Figure 2, when the pipe 20 is assembled in the clip 10, the long detent arm 12 is kept bent by the large-diameter pipe 20, whereas the clip is kept only under the short detent arm 14. When the pipe-clip assembly is put under vibration/oscillation or other undesired external forces that can disassemble the pipe 20 from the clip 10, the short detent arm 14 may be deformed and bent out, then the pipe 20 escapes from opening of the cavity 13. The pull-out force is not enough to keep safely the pipe-clip assembly.

Figure 3 illustrates a side view showing a clip according to the present disclosure.

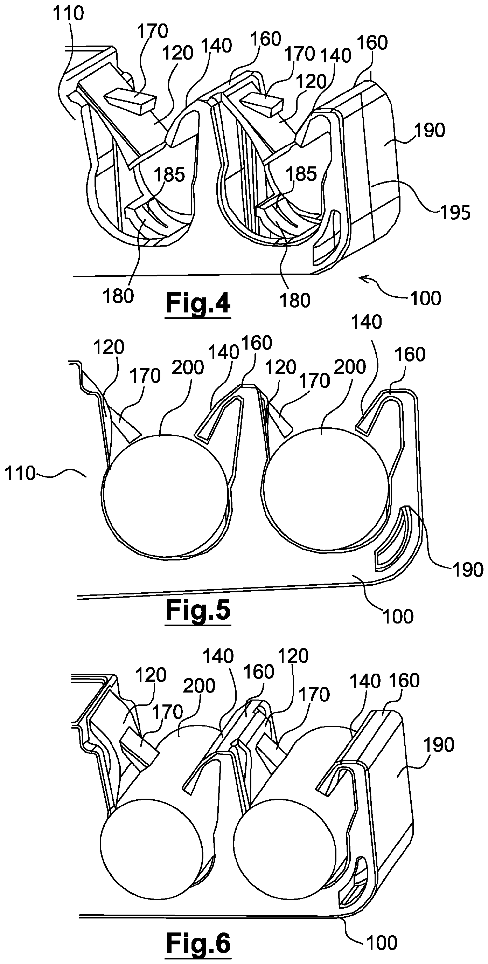

As shown in Figure 3, the clip 100 according to the present disclosure comprises at least one clip unit. The clip unit is adapted to bear a tube or the like, which will be described in more detail in the following description. The clip unit has a recess 130, said recess being defined by a bottom 134, two opposing sidewalls 150, 190 (shown in Figure 4), and an opening 132 opposing to said bottom. In a preferred embodiment, the recess 130 presents a form of a substantially U-shaped concave.

The clip unit comprises a first elastic detent arm and a second elastic detent arm 120, 140. The detent arms 120, 140 have each an upper end 122, 142 and a lower end 124, 144, wherein said detent arms 120, 140 are attached respectively to the two opposing sidewalls 150, 190 at the upper end 122, 124, said two detent arms 120, 140 extends diagonally towards the bottom 134. In a preferred embodiment, the upper ends 122, 142 are integrated respectively with an upper portion of said two opposing sidewalls 150, 190. The recess 130 and at least one of the lower ends 124, 144 form a holding space for an inserted tube or the like. This will be detailed in the following description.

The clip unit comprises further a stop member 170 having a superior end 172 and an inferior end 174. The superior end 172 is attached to the first detent arm, while the inferior end protrudes diagonally downwards towards the second arm 140. In a preferred embodiment, the superior end 172 is integrated with a superior surface of the first detent arm. Advantageously, this configuration allows the clip to receive and hold different tubes with a wider range of diameters, especially tubes of large-diameter that the clip as shown in the Figure 2 cannot hold firmly.

In some embodiments, the superior end 172 of the stop member is close to the upper end 122 of the first detent arm. More particularly, the stop member 170 is located substantially in the middle of the first detent arm in the direction along the recess 130. This configuration allows to reduce mold making cost.

In some embodiments, the detent arms 120, 140 can be of same width as the sidewalls in the direction along the recess. Advantageously, the holding force by the detent arms can be increased. In addition, to reach a predetermined holding force, a certain width of the detent arms is needed, thus this aspect helps the clip to have a compact structure.

In some embodiments, the stop member 170 can be of same width as the first detent arm 120 in the direction along the recess. Advantageously, the holding force by the stop member 170 can be increased.

The elastic detent arms 120, 140 and the elastic stop member 170 present advantageously characteristics of deformation and are able to be bent by external forces, applied to their free ends 124, 144, 174. Advantageously, the detent arms 120, 140 and the stop member 170 has such a rigidity and/or a flexibility so that these components 120, 140, 170 bend to relative sidewalls when an elongated piece 200 is being inserted into the recess 130, and then return to a position to hold the inserted elongated piece 200 in the recess 130. Preferably, the detent arms 120, 140 bend to the sidewalls at their upper end 122, 124, and the stop member 170 at the superior end 172.

In some embodiments, the first detent arm 120 and the stop member 170 are of the same rigidity. Advantageously, a tube of large-diameter can be held steadily by the clip according to the present disclosure.

In some embodiments, the stop member 170 can be of less length than the first detent arm 120. Advantageously, this configuration assures that the insertion force does not increase, when a tube of small diameter is inserted into the clip 100 according to the present disclosure.

In some embodiments, the clip comprises a plurality of clip units disposed substantially in parallel. As shown in Figure 3, the clip 100 according to the present disclosure includes two clip units parallel to each other. In some embodiments (non represented), the clip 100 according to the present disclosure includes more than two clip units parallel to each other. Advantageously, this aspect allows the clip to hold simultaneously a plurality of tubes or the like and keep them in parallel.

Figure 4 is a perspective view showing a clip according to the present disclosure.

We observe a bottom leg 180 on the bottom 134 of the recess 130 on Fig. 4.

In some embodiments, the clip unit comprises a bottom leg 180 at the bottom 134 of the recess 130. Advantageously, the bottom leg helps to increase and/or control sliding forces of tube(s) held by the clip. This aspect is particularly advantageous when tubes are firstly assembled with the clip 100 according to the present disclosure and then the tubes and the clips are delivered as a tubes bundle. The bottom leg 180 is useful to keep the clips on the tubes against the vibration during different operations such as transportation.

In some embodiments, the bottom leg 180 is elastic and has a curving form toward the opening 132. The bottom leg 180 is flexible and is able to adapt its form to receive an inserted tube in terms of the tube's parameters, such as diameter or weight. The curving form of the leg 180 allows a good fit with the inserted tube, thus increase the sliding force.

In some embodiments, the bottom leg 180 is integrated with the bottom 134 at one end and has a free end which protrudes towards the first detent arm. Advantageously, this aspect allows also a good fit between the insert tube and the bottom.

Advantageously, the bottom leg 180 showing in the bottom of the recess 130 helps the clip to have a compact structure.

In some embodiments, the bottom leg 180 is less wide has a less width than the bottom in the direction along the recess 130.

The clip according to the present disclosure can be made by molding of known plastic, more particularly of engineering plastics such as polyamides, acetal resins, thermoplastic polyesters. In preferred embodiments, the clip 100 according to the present disclosure is formed by integral injection molding. This aspect helps advantageously to have a clip with a more stable structure.

In a preferred embodiment, the clip is obtained with a simple main parting line 195 through injection molding, as shown in present Figure 4. This simple parting line shows that the clip can be released by a simple mold. Advantageously, this relatively simple parting line allows to reduce mold making cost. The parting line 185 appears on the bottom leg 180 is also advantageous to control sliding force, thus prevent the pipe 200 from sliding along the recess 130.

In an embodiment (not represented), the clip further comprises securing means for fastening the clip 100 to a structure to be fastened. The securing means may be assembled to a clip obtained by integral molding. By fastening the securing means to a structure, the clip can be attached to a vehicle chassis to fix, for example, oil pipes thereon.

Figure 5 illustrates a side view showing a clip with pipes inserted according to the present disclosure.

We observe a clip 100 with two clip units holding two large-diameter tubes 200 on Fig. 5. The first detent arm 120 is bent towards the sidewall 110. The clip holds the tube 200 through a second arm 140 and a stop member 170, wherein the lower end 142 of the second arm 140 rests on the tube 200 and the inferior end 172 of the stop member 170 may further limit the tube 200.

The lower end 124 of the first detent arm 120 has a lower level than the lower end 144 of the second detent arm 140. Advantageously, according to this aspect, tubes of different diameters may be received in the recess 130 and hold by the detent arms 120, 140 and in necessary the stop member 170. When a tube of large-diameter is inserted into the recess 130, the first detent arm 120 may not return to a position to hold the tube but keep bending to a sidewall 150.

In a more preferred embodiment, the inferior end 174 has a level between that of the first detent arm and that of the second detent arm 124, 144, as shown in Figure 5. A large-diameter tube is of such a diameter that when it is inserted in the recess 130, the first detent arm keeps bent towards a sidewall by the tube. Consequently, the large-diameter tube inserted into the recess 130 is hold by the second arm 140 and the stop member 170, the lower end 142 and the inferior end 172 may rest against the tube 200.

In some embodiments, the stop member 170, the detent arms 120, 140 present edges parallel to each other. Advantageously a tube 200 can fit in the clip and be held firmly.

In some embodiments, the inferior end 174 of the stop member 170 presents an edge parallel to the direction along the recess 130. Advantageously, when a tube 200 of large-diameter is inserted in the clip 100, the stop member can fit the tube in the direction along the recess and catch the tube steadily.

Figure 6 is a perspective view showing a clip with pipes inserted according to the present disclosure.

By setting a stop member on the superior surface of a detent arm, the detent arm can be thus set on the total length of the sidewall on the direction along the recess. This aspect helps to avoid arrange detent arms with lower ends of different levels along a same sidewall, the size of the clip is thus reduced.

Although the present disclosure has been described with reference to one or more examples illustrative and not restrictive, those skilled in the art will recognize that changes may be made in form and detail without departing from the scope of the invention as defined in the appended claims.

### REFERENCE LIST

| Reference | Designation |
|---|---|
| 10 | clip |
| 12 | long detent arm |
| 13 | cavity |
| 14 | short detent arm |
| 15 | lateral sidewall |
| 18 | bottom |
| 19 | lateral sidewall |
| 20 | pipe |
| 200 | tube, an elongated piece |
| 100 | clip |
| 110 | sidewall |
| 120 | first detent arm |
| 122 | upper end |
| 124 | lower end |
| 130 | recess |
| 132 | opening |
| 134 | bottom |
| 140 | second detent arm |
| 142 | upper end |
| 144 | lower end |
| 150 | sidewall |
| 160 | connection portion |
| 170 | stop member |
| 172 | superior end |
| 174 | inferior end |
| 180 | bottom leg |
| 185 | parting line |
| 190 | sidewall |
| 195 | main parting line |

## Claims

1. A clip (100) adapted to bear an elongated piece (200), comprising:
- at least one clip unit having a recess (130), said recess being defined by a bottom (134), two opposing sidewalls (150, 190), and an opening (132) opposing to said bottom,
- a first elastic detent arm and a second elastic detent arm (120, 140) having each an upper end (122, 142) and a lower end (124, 144), said detent arms (120, 140) being integrated respectively with an upper portion of said two sidewalls (150, 190) at the upper end (122, 124), said two detent arms (120, 140) projecting diagonally towards the bottom (134), and said recess (130) and at least one of said lower ends (124, 144) of said detent arms (120, 140) form a holding space for said elongated piece (200),
wherein said clip unit comprises a stop member (170) having a superior end (172) and an inferior end (174), said superior end (172) being attached to the first detent arm on its superior surface, said inferior end (174) protruding downwards towards the second detent arm (140),
**characterized in that**
said lower end (124) of the first detent arm (120) has a lower level than said lower end (144) of the second detent arm (140).

2. The clip (100) according to claim 1, **characterized in that**: the inferior end (174) has a level between the lower end (124) of the first detent arm and the lower end (144) of the second detent arm.

3. The clip (100) according to any one of preceding claims, **characterized in that**: the clip unit comprises a bottom leg (180) at the bottom (134).

4. The clip (100) according to claim 3, **characterized in that**: the bottom leg (180) is elastic and has a curving form toward the opening (132).

5. The clip (100) according to claim 3 or claim 4, **characterized in that**: the bottom leg (180) at the bottom (134) is integrated with the bottom (134) and has a free end protrudes towards the first detent arm.

6. The clip (100) according to any one of claims 3 to 5, **characterized in that**: the bottom leg (180) is less wide than the bottom along the recess (130).

7. The clip (100) according to any one of preceding claims, **characterized in that**: the clip comprises a plurality of clip units disposed substantially in parallel.

8. The clip (100) according to any one of preceding claims, **characterized in that**: the stop member (170), the detent arms (120, 140) present edges parallel to each other.

9. The clip (100) according to any one of preceding claims, **characterized in that**: the inferior end (174) of the stop member (170) presents an edge parallel to the direction along the recess (130).

10. The clip (100) according to any one of preceding claims, **characterized in that**: the first detent arm (120) and the stop member (170) are of the same rigidity.

11. The clip (100) according to any one of preceding claims, **characterized in that**: the stop member (170) can be of less length than the first detent arm (120).

12. The clip (100) according to any one of preceding claims, **characterized in that**: the superior end (172) of the stop member is close to the upper end (122) of the first detent arm, more particularly, the stop member (170) is located in the middle of the first detent arm (120) in the direction along the recess (130).

13. The clip (100) according to any one of preceding claims, **characterized in that**: the clip (100) is formed by integral injection molding.

14. The clip (100) according to any one of preceding claims, **characterized in that**: the clip further comprises securing means for fastening the clip (100) to a structure to be fastened.

## Patentansprüche

1. Klemme (100), die dazu ausgelegt ist, ein längliches Stück (200) zu tragen, umfassend:
- mindestens eine Klemmeinheit, die eine Aussparung (130) aufweist, wobei die Aussparung durch eine Unterseite (134), zwei gegenüberliegende Seitenwände (150, 190) und eine Öffnung (132) gegenüber der Unterseite definiert ist,
- einen ersten elastischen Rastarm und einen zweiten elastischen Rastarm (120, 140), die jeweils ein oberes Ende (122, 142) und ein unteres Ende (124, 144) aufweisen, wobei die Rastarme (120, 140) jeweils in einen oberen Abschnitt der beiden Seitenwände (150, 190) am oberen Ende (122, 124) integriert sind, wobei die beiden Rastarme (120, 140) diagonal zur Unterseite (134) hin vorstehen und die Aussparung (130) und mindestens eines der unteren Enden (124, 144) der Rastarme (120, 140) einen Halteraum für das längliche Stück (200) bilden,
wobei die Klemmeinheit ein Anschlagelement (170) umfasst, das ein oberes Ende (172) und ein unteres Ende (174) aufweist, wobei das obere Ende (172) an seiner oberen Oberfläche am ersten Rastarm befestigt ist und das untere Ende (174) nach unten zum zweiten Rastarm (140) hin vorsteht,
**dadurch gekennzeichnet, dass** das untere Ende (124) des ersten Rastarms (120) eine niedrigere Höhe als das untere Ende (144) des zweiten Rastarms (140) aufweist.

2. Klemme (100) nach Anspruch 1, **dadurch gekennzeichnet, dass** das untere Ende (174) eine Höhe zwischen dem unteren Ende (124) des ersten Rastarms und dem unteren Ende (144) des zweiten Rastarms aufweist.

3. Klemme (100) nach einem der vorhergehenden Ansprüche, **dadurch gekennzeichnet, dass** die Klemmeinheit einen unteren Schenkel (180) an der Unterseite (134) umfasst.

4. Klemme (100) nach Anspruch 3, **dadurch gekennzeichnet, dass** der untere Schenkel (180) elastisch ist und zur Öffnung (132) hin eine geschwungene Form aufweist.

5. Klemme (100) nach Anspruch 3 oder Anspruch 4, **dadurch gekennzeichnet, dass** der untere Schenkel (180) an der Unterseite (134) in die Unterseite (134) integriert ist und ein freies Ende aufweist, das zum ersten Rastarm hin vorsteht.

6. Klemme (100) nach einem der Ansprüche 3 bis 5, **dadurch gekennzeichnet, dass** der untere Schenkel (180) entlang der Aussparung (130) weniger breit ist als die Unterseite.

7. Klemme (100) nach einem der vorhergehenden Ansprüche, **dadurch gekennzeichnet, dass** die Klemme eine Vielzahl von Klemmeinheiten umfasst, die im Wesentlichen parallel angeordnet sind.

8. Klemme (100) nach einem der vorhergehenden Ansprüche, **dadurch gekennzeichnet, dass** das Anschlagelement (170) und die Rastarme (120, 140) parallel zueinander verlaufende Kanten aufweisen.

9. Klemme (100) nach einem der vorhergehenden Ansprüche, **dadurch gekennzeichnet, dass** das untere Ende (174) des Anschlagelements (170) eine Kante parallel zur Richtung entlang der Aussparung (130) aufweist.

10. Klemme (100) nach einem der vorhergehenden Ansprüche, **dadurch gekennzeichnet, dass** der erste Rastarm (120) und das Anschlagelement (170) die gleiche Steifigkeit aufweisen.

11. Klemme (100) nach einem der vorhergehenden Ansprüche, **dadurch gekennzeichnet, dass** das Anschlagelement (170) eine geringere Länge aufweisen kann als der erste Rastarm (120).

12. Klemme (100) nach einem der vorhergehenden Ansprüche, **dadurch gekennzeichnet, dass** das obere Ende (172) des Anschlagelements nahe am oberen Ende (122) des ersten Rastarms liegt, wobei das Anschlagelement (170) insbesondere in der Mitte des ersten Rastarms (120) in der Richtung entlang der Aussparung (130) angeordnet ist.

13. Klemme (100) nach einem der vorhergehenden Ansprüche, **dadurch gekennzeichnet, dass** die Klemme (100) durch integrales Spritzgießen gebildet ist.

14. Klemme (100) nach einem der vorhergehenden Ansprüche, **dadurch gekennzeichnet, dass** die Klemme ferner Befestigungsmittel zum Befestigen der Klemme (100) an einer zu befestigenden Struktur umfasst.

## Revendications

1. Pince (100) adaptée pour porter une pièce allongée (200), comprenant :
- au moins une unité pince ayant un évidement (130), ledit évidement étant défini par un fond (134), deux parois latérales opposées (150, 190) et une ouverture (132) opposée audit fond,
- un premier bras d'encliquetage élastique et un deuxième bras d'encliquetage élastique (120, 140) ayant chacun une extrémité haute (122, 142) et une extrémité basse (124, 144), lesdits bras d'encliquetage (120, 140) étant solidaires respectivement d'une partie haute desdites deux parois latérales (150, 190) au niveau de l'extrémité haute (122, 124), lesdits deux bras d'encliquetage (120, 140) faisant saillie en diagonale vers le fond (134), et ledit évidement (130) et au moins l'une desdites extrémités basses (124, 144) desdits bras d'encliquetage (120, 140) forment un espace de retenue pour ladite pièce allongée (200),
dans laquelle ladite unité pince comprend un organe de butée (170) ayant une extrémité supérieure (172) et une extrémité inférieure (174), ladite extrémité supérieure (172) étant fixée au premier bras d'encliquetage sur sa surface supérieure, ladite extrémité inférieure (174) faisant saillie vers le bas vers le deuxième bras d'encliquetage (140),
**caractérisée en ce que** ladite extrémité basse (124) du premier bras d'encliquetage (120) possède un niveau plus bas que ladite extrémité basse (144) du deuxième bras d'encliquetage (140).

2. Pince (100) selon la revendication 1, **caractérisée en ce que** : l'extrémité inférieure (174) possède un niveau entre l'extrémité basse (124) du premier bras d'encliquetage et l'extrémité basse (144) du deuxième bras d'encliquetage.

3. Pince (100) selon une quelconque des revendications précédentes, **caractérisée en ce que** : l'unité pince comprend une patte inférieure (180) au niveau du fond (134).

4. Pince (100) selon la revendication 3, **caractérisée en ce que** : la patte inférieure (180) est élastique et possède une forme qui s'incurve vers l'ouverture (132).

5. Pince (100) selon la revendication 3 ou la revendication 4, **caractérisée en ce que** : la patte inférieure (180) au niveau du fond (134) est solidaire du fond (134) et possède une extrémité libre qui fait saillie vers le premier bras d'encliquetage.

6. Pince (100) selon l'une quelconque des revendications 3 à 5, **caractérisée en ce que** : la patte inférieure (180) est moins large que le fond le long de l'évidement (130).

7. Pince (100) selon une quelconque des revendications précédentes, **caractérisée en ce que** : la pince comprend une pluralité d'unités pince disposées sensiblement en parallèle.

8. Pince (100) selon une quelconque des revendications précédentes, **caractérisée en ce que** : l'organe de butée (170), les bras d'encliquetage (120, 140) présentent des bords parallèles les uns aux autres.

9. Pince (100) selon une quelconque des revendications précédentes, **caractérisée en ce que** : l'extrémité inférieure (174) de l'organe de butée (170) présente un bord parallèle à la direction le long de l'évidement (130).

10. Pince (100) selon une quelconque des revendications précédentes, **caractérisée en ce que** : le premier bras d'encliquetage (120) et l'organe de butée (170) sont de la même rigidité.

11. Pince (100) selon une quelconque des revendications précédentes, **caractérisée en ce que** : l'organe de butée (170) peut être d'une longueur moindre que le premier bras d'encliquetage (120).

12. Pince (100) selon une quelconque des revendications précédentes, **caractérisée en ce que** : l'extrémité supérieure (172) de l'organe de butée est proche de l'extrémité haute (122) du premier bras d'encliquetage, plus particulièrement, l'organe de butée (170) est situé au milieu du premier bras d'encliquetage (120) dans la direction le long de l'évidement (130).

13. Pince (100) selon une quelconque des revendications précédentes, **caractérisée en ce que** : la pince (100) est formée par moulage par injection d'un seul tenant.

14. Pince (100) selon une quelconque des revendications précédentes, **caractérisée en ce que** : la pince comprend en outre des moyens d'attache pour fixer la pince (100) à une structure devant être attachée.
